# EUROPEAN PATENT APPLICATION

(11) **EP 4 693 786 A2**
(43) Date of publication of application: **11.02.2026**
(21) Application number: 25189795.5
(22) Date of filing: 16.07.2025
(51) Int. Cl.: H02J 1/08, H02J 3/32, H02J 4/00, H02M 1/32, H02M 7/493

(54) **POWER SUPPLY SYSTEM**

(30) Priority: 17.07.2024 CN 202410957567
(71) Applicant: HUAWEI DIGITAL POWER TECHNOLOGIES CO., LTD., Shenzhen Guangdong 518043 (CN)
(72) Inventor: HU, Xing, Shenzhen, Guangdong 518043 (CN); ZHAN, Jinxiang, Shenzhen, Guangdong 518043 (CN); TANG, Yunyu, Shenzhen, Guangdong 518043 (CN); LIU, Yuxin, Shenzhen, Guangdong 518043 (CN); LI, Wuying, Shenzhen, Guangdong 518043 (CN)
(74) Representative: Maiwald GmbH

(57) **Abstract**

Embodiments of this application provide a power supply system. The power supply system includes an energy storage unit, a plurality of converters, a controller, a plurality of positive switch units, and a plurality of negative switch units. A positive direct current end and a negative direct current end of the converter are respectively connected to a positive direct current busbar and a negative direct current busbar by using the positive switch unit and the negative switch unit. The positive direct current busbar and the negative direct current busbar are respectively connected to a positive electrode and a negative electrode of the energy storage unit. A positive direct current end and a negative direct current end of a first converter are connected to the positive direct current busbar and the negative direct current busbar by using a first positive switch unit and a first negative switch unit. A positive direct current end and a negative direct current end of a second converter are connected to the positive direct current busbar and the negative direct current busbar by using a second positive switch unit and a second negative switch unit. When the first converter is short-circuited, the controller controls switch devices in the first positive switch unit and the first negative switch unit to be turned off, and controls a switch device in the second positive switch unit and/or a switch device in the second negative switch unit to be turned off.

## Description

### TECHNICAL FIELD

This application relates to the field of power electronics, and in particular, to a power supply system.

### BACKGROUND

An energy storage system is widely used in various scenarios like an industry and commerce scenario, a power station scenario, a household scenario, a charging station scenario, and the like. A power conversion system in the energy storage system mainly performs conversion between a direct current and an alternating current, controls battery charging and discharging processes, and interacts with a power grid. In the energy storage system, a battery container needs to be equipped with a plurality of power conversion systems to simultaneously convert electric energy. The power conversion systems are usually integrated inside or outside the container. For the entire energy storage system, when a fault occurs on the power conversion system, the faulty power conversion system can be actively disconnected, to prevent the fault from spreading to a battery side and another device connected in parallel to the faulty power conversion system. In a power conversion system architecture, used to improve capacity of the energy storage system, that is connected to a same direct current side and a same alternating current side, when one power conversion system is faulty, short-circuit current paths of "battery system-faulty device" and "power grid-faulty device" exist, and a short-circuit current path of "power grid-affected device-faulty component" also exists. This may cause damage to both the battery side and the device connected in parallel to the faulty power conversion system. Therefore, how to prevent a short-circuit fault that occurs on the power conversion system from spreading and affecting normal running of other devices in an energy storage system equipped with a plurality of power conversion systems is one of technical problems that urgently need to be resolved currently.

### SUMMARY

Embodiments of this application provide a power supply system, which can cut off a short-circuit current between a converter and a corresponding energy storage unit, and prevent the short-circuit current from spreading and interfering with normal working of another converter or even damaging the another converter.

According to a first aspect, this application provides a power supply system. The power supply system includes an energy storage unit, a plurality of converters, a controller, a plurality of positive switch units and a plurality of negative switch units that one-to-one correspond to the plurality of converters. A positive direct current end of each converter is connected to a positive direct current busbar by using a corresponding positive switch unit. A negative direct current end of each converter is connected to a negative direct current busbar by using a corresponding negative switch unit. The positive direct current busbar and the negative direct current busbar are respectively connected to a positive electrode and a negative electrode of the energy storage unit. A positive direct current end of a first converter in the plurality of converters is connected to the positive direct current busbar by using a first positive switch unit in the plurality of positive switch units. A negative direct current end of the first converter is connected to the negative direct current busbar by using a first negative switch unit in the plurality of negative switch units. A positive direct current end of a second converter in the plurality of converters is connected to the positive direct current busbar by using a second positive switch unit in the plurality of positive switch units. A negative direct current end of the second converter is connected to the negative direct current busbar by using a second negative switch unit in the plurality of negative switch units. The controller is configured to: when the first converter is short-circuited, control switch devices in the first positive switch unit and the first negative switch unit that are connected to the first converter to be turned off, and control a switch device in the second positive switch unit connected to the second converter and/or a switch device in the second negative switch unit connected to the second converter to be turned off.

In this application, when any converter is short-circuited, each converter in the power supply system controls, by using each respective controller or by using one controller, switch devices in a positive switch unit and a negative switch unit that are connected to the converter to be turned off, to cut off a short-circuit current between the converter and a corresponding energy storage unit. In addition, the controller controls a switch device in at least one of a positive switch unit and a negative switch unit to be turned off, where the positive switch unit and the negative switch unit are connected to another converter connected in parallel to a faulty converter, to cut off a path of a short-circuit current flowing between a power grid, an affected device, and the faulty converter. This prevents the short-circuit current from interfering with normal working of another converter or even damaging the another converter, and improves working reliability of the power supply system.

In a possible implementation, that the controller is specially configured to: when the first converter is short-circuited, controlling the switch devices in the first positive switch unit and the first negative switch unit that are connected to the first converter to be turned off, and controlling the switch device in the second positive switch unit connected to the second converter and/or the switch device in the second negative switch unit connected to the second converter to be turned off includes: when a voltage between the positive direct current busbar and the negative direct current busbar that are connected to the first converter is lower than a specified voltage threshold, controlling the switch devices in the first positive switch unit and the first negative switch unit that are connected to the first converter to be turned off, and controlling the switch device in the second positive switch unit connected to the second converter and/or the switch device in the second negative switch unit connected to the second converter to be turned off. Herein, the controller obtains the voltage between the positive direct current busbar and the negative direct current busbar that are connected to each converter, to detect whether a short-circuit fault occurs on each converter. In addition, when the voltage between the positive direct current busbar and the negative direct current busbar that are connected to any converter is excessively low, the controller controls switch devices in the positive switch unit and the negative switch unit that are connected to the converter to be turned off, to cut off a short-circuit current between the faulty converter and a corresponding energy storage unit. In addition, the controller controls a switch device in at least one of a positive switch unit and a negative switch unit that are connected to a converter on which the short-circuit fault does not occur to be turned off, to cut off the path of the short-circuit current flowing between the power grid, the affected device, and the faulty converter. This prevents the short-circuit current from interfering with normal working of the converter or even damaging the converter, and improves working reliability of the power supply system.

In a possible implementation, the positive switch unit includes an anti-reverse device and/or the negative switch unit includes an anti-reverse device. The anti-reverse device is configured to: when a switch device in the positive switch unit or the negative switch unit that corresponds to the anti-reverse device is turned off, cut off a short-circuit current. When the short-circuit fault occurs on a converter, the controller controls switch devices in a positive switch unit and a negative switch unit that are connected to the converter to be turned off, to cut off the short-circuit current between the faulty converter and the corresponding energy storage unit. When the short-circuit fault spreads, the controller further controls a switch device in at least one of a positive switch unit and a negative switch unit that are connected to another converter to be turned off, to cut off the path of the short-circuit current path flowing between the power grid, the affected device, and the faulty converter.

In a possible implementation, the negative switch unit includes the anti-reverse device. The switch device in the positive switch unit is configured to: when the switch device in the positive switch unit is turned on or turned off, separately connect or disconnect the positive direct current busbar to or from the positive direct current end of the first converter. The anti-reverse device in the first negative switch unit is configured to: when the switch device in the first negative switch unit is turned off, cut off a short-circuit current flowing from the negative direct current end of the first converter to the negative electrode of the energy storage unit. The anti-reverse device in the second negative switch unit is configured to: when the switch device in the second negative switch unit is turned off, cut off a short-circuit current flowing from the negative direct current end of the second converter to the negative direct current end of the first converter. Herein, the switch device in each negative switch unit may be a semiconductor switch, and the semiconductor switch may be turned off at a microsecond level. That is, a speed of cutting off the short-circuit current can be ensured, to prevent the faulty converter from being damaged due to overcurrent. The switch device in each positive switch unit is a fast turn-off apparatus. When each converter works normally, the fast turn-off apparatus can reduce a loss of a normal power current, and ensure power supply efficiency of the power supply system.

In a possible implementation, the positive switch unit and the negative switch unit include the anti-reverse device. The anti-reverse device in the first negative switch unit is configured to: when the switch device in the first negative switch unit is turned off, cut off a short-circuit current flowing from the negative direct current end of the first converter to the negative electrode of the energy storage unit. The anti-reverse device in the second positive switch unit is configured to: when the switch device in the second positive switch unit is turned off, cut off a short-circuit current flowing from the positive direct current end of the second converter to the positive direct current end of the first converter. The anti-reverse device in the second negative switch unit is configured to: when the switch device in the corresponding negative switch unit is turned off, cut off a short-circuit current flowing from the negative direct current end of the second converter to the negative direct current end of the first converter. When the short-circuit fault occurs on a converter, the controller controls switch devices in a positive switch unit and a negative switch unit that are connected to the converter to be turned off, to cut off the short-circuit current between the faulty converter and the corresponding energy storage unit. When the short-circuit fault spreads, the controller further controls a switch device in at least one of a positive switch unit and a negative switch unit that are connected to another converter to be turned off, to cut off the path of the short-circuit current path flowing between the power grid, the affected device, and the faulty converter.

In a possible implementation, the positive switch unit and the negative switch unit include the anti-reverse device. The anti-reverse device in the first positive switch unit is configured to: when the switch device in the first positive switch unit is turned off, cut off a short-circuit current flowing from the positive electrode of the energy storage unit to the positive direct current end of the first converter, and cut off a short-circuit current flowing from the positive direct current end of the second converter to the positive direct current end of the first converter. The anti-reverse device in the first negative switch unit is configured to: when the switch device in the first negative switch unit is turned off, cut off a short-circuit current flowing from the negative direct current end of the first converter to the negative electrode of the energy storage unit. The anti-reverse device in the second negative switch unit is configured to: when the switch device in the second negative switch unit is turned off, cut off a short-circuit current flowing from the negative direct current end of the second converter to the negative direct current end of the first converter. When the short-circuit fault occurs on a converter, the controller controls switch devices in a positive switch unit and a negative switch unit that are connected to the converter to be turned off, to cut off the short-circuit current between the faulty converter and the corresponding energy storage unit. When the short-circuit fault spreads, the controller further controls a switch device in at least one of a positive switch unit and a negative switch unit that are connected to another converter to be turned off, to cut off the path of the short-circuit current path flowing between the power grid, the affected device, and the faulty converter.

In a possible implementation, the energy storage unit and the plurality of converters are installed inside a container, and alternating current ends of the plurality of converters are connected to a power grid through an interface on the container.

According to a second aspect, this application provides a power supply system. The power supply system includes an energy storage unit, a plurality of converters, a controller, a plurality of positive switch units and a plurality of negative switch units that one-to-one correspond to the plurality of converters. A positive direct current end of each converter is connected to a positive direct current busbar by using a corresponding positive switch unit. A negative direct current end of each converter is connected to a negative direct current busbar by using a corresponding negative switch unit. The positive direct current busbar and the negative direct current busbar are respectively connected to a positive electrode and a negative electrode of the energy storage unit. A positive direct current end of a first converter in the plurality of converters is connected to the positive direct current busbar by using a first positive switch unit in the plurality of positive switch units. A negative direct current end of the first converter is connected to the negative direct current busbar by using a first negative switch unit in the plurality of negative switch units. A positive direct current end of a second converter in the plurality of converters is connected to the positive direct current busbar by using a second positive switch unit in the plurality of positive switch units. A negative direct current end of the second converter is connected to the negative direct current busbar by using a second negative switch unit in the plurality of negative switch units. A switch device in the first positive switch unit is configured to: when the switch device in the first positive switch unit is turned off, cut off a current flowing into the positive direct current end of the first converter. A switch device in the first negative switch unit is configured to: when the switch device in the first negative switch unit is turned off, cut off a current flowing into the negative direct current end of the first converter or cut off a current flowing out from the negative direct current end of the first converter. The controller is configured to: when the first converter is short-circuited, control the switch devices in the first positive switch unit and the first negative switch unit that are connected to the first converter to be turned off.

In this application, when a short-circuit fault occurs on the first converter, the controller controls the switch devices in the first positive switch unit and the first negative switch unit that are connected to the first converter to be turned off. When the switch device in the first positive switch unit is turned off, the switch device in the first positive switch unit cuts off the current flowing into the positive direct current end of the first converter. In addition, when the switch device in the first negative switch unit is turned off, the switch device in the first negative switch unit cuts off the current flowing into the negative direct current end of the first converter or cuts off the current flowing out from the negative direct current end of the first converter. Therefore, when the switch devices in the first positive switch unit and the first negative switch unit are turned off, a short-circuit current between the faulty converter and a corresponding energy storage unit and a short-circuit current flowing between a power grid, an affected device, and the faulty converter may be simultaneously cut off. This prevents the short-circuit current from spreading and interfering with normal working of another converter or even damaging the another converter, and improves working reliability of the power supply system.

In a possible implementation, the positive switch unit and the negative switch unit include an anti-reverse device. The anti-reverse device in the first positive switch unit is configured to: when the switch device in the first positive switch unit is turned off, cut off a short-circuit current flowing from the positive electrode of the energy storage unit to the positive direct current end of the first converter, and cut off a short-circuit current flowing from the positive direct current end of the second converter to the positive direct current end of the first converter. The anti-reverse device in the first negative switch unit is configured to: when the switch device in the first negative switch unit is turned off, cut off a short-circuit current flowing from the negative electrode of the energy storage unit to the negative direct current end of the first converter, and cut off a short-circuit current flowing from the negative direct current end of the second converter to the negative direct current end of the first converter. When the short-circuit fault occurs on a converter, the controller controls switch devices in a positive switch unit and a negative switch unit that are connected to the converter to be turned off, to cut off a short-circuit current between the faulty converter and the corresponding energy storage unit, and also cut off the path of the short-circuit current flowing between the power grid, the affected device, and the faulty converter. The operation is simple, and prevents the short-circuit current from interfering with normal working of another converter or even damaging the another converter.

In a possible implementation, the positive switch unit includes the anti-reverse device. A switch device in the negative switch unit is configured to: when the switch device in the negative switch unit is turned on or turned off, separately connect or disconnect the negative direct current busbar to or from the negative direct current end of the first converter. The anti-reverse device in the first positive switch unit is configured to: when the switch device in the first positive switch unit is turned off, cut off a short-circuit current flowing from the positive electrode of the energy storage unit to the positive direct current end of the first converter, and cut off a short-circuit current flowing from the positive direct current end of the second converter to the positive direct current end of the first converter. When the short-circuit fault occurs on a converter, the controller controls switch devices in a positive switch unit and a negative switch unit that are connected to the converter to be turned off, to cut off a short-circuit current between the faulty converter and the corresponding energy storage unit, and also cut off the path of the short-circuit current flowing between the power grid, the affected device, and the faulty converter. The operation is simple, and prevents the short-circuit current from interfering with normal working of another converter or even damaging the another converter.

### BRIEF DESCRIPTION OF DRAWINGS

FIG. 1 is a diagram of an application scenario of a power supply system according to this application;
FIG. 2 is a diagram of another application scenario of a power supply system according to this application;
FIG. 3 is a diagram of a structure of a power supply system according to this application;
FIG. 4 is a diagram of another structure of a power supply system according to this application;
FIG. 5 is a diagram of another structure of a power supply system according to this application;
FIG. 6 is a diagram of another structure of a power supply system according to this application;
FIG. 7 is a diagram of another structure of a power supply system according to this application;
FIG. 8 is a diagram of another structure of a power supply system according to this application;
FIG. 9 is a diagram of another structure of a power supply system according to this application; and
FIG. 10 is a diagram of another structure of a power supply system according to this application.

### DESCRIPTION OF EMBODIMENTS

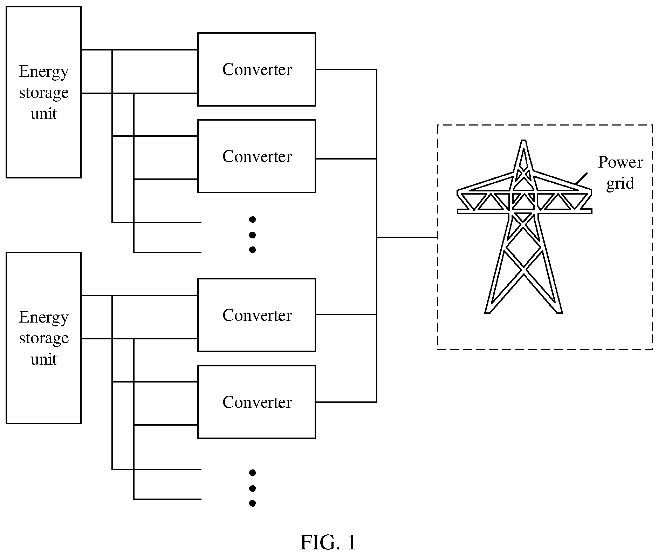

FIG. 1 is a diagram of an application scenario of a power supply system according to this application. The power supply system provided in this application may include an energy storage unit and a plurality of converters. A positive direct current end and a negative direct current end of each converter are respectively connected to a positive electrode and a negative electrode of the energy storage unit by using a positive direct current busbar and a negative direct current busbar. An alternating current end of each converter is connected to a power grid, and each energy storage unit is connected to the plurality of converters. The converter may perform inversion conversion on a direct current provided by the energy storage unit, and then output an alternating current to the power grid. In addition, when the converter is connected to a grid, the converter may further rectify an alternating current provided by the power grid and output a rectified alternating current to a corresponding energy storage unit for charging.

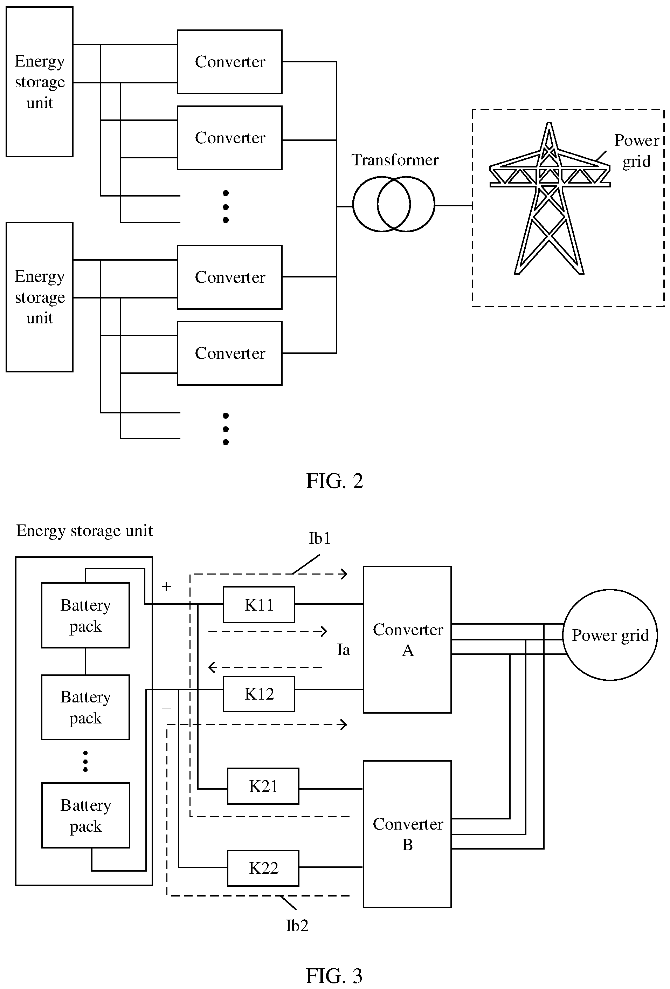

In some feasible implementations, the power supply system may include a transformer. FIG. 2 is a diagram of another application scenario of a power supply system according to this application. An output end of each converter may be connected to a power grid by using the transformer. The transformer may change (increase or reduce voltage, or the like) an alternating current provided by the converter, and supply power to the power grid by using a changed alternating current.

In some feasible implementations, the energy storage unit and the plurality of converters in the power supply system shown in FIG. 1 or FIG. 2 may be installed inside a container, and alternating current ends of the plurality of converters are connected to the power grid through an interface on the container.

In the application scenario of the power supply system shown in FIG. 1 or FIG. 2, the converter that corresponds to and is connected to each energy storage unit is connected to a same direct current side and a same alternating current side. In other words, in the plurality of converters that correspond to and are connected to one energy storage unit, one end of each converter is connected to a same energy storage unit, and the other end of the converter is connected to a same power grid. When one of the power conversion systems in the power supply system is faulty, a path of a short-circuit current flowing between the energy storage unit and the faulty converter exists, and a path of a short-circuit current flowing between the power grid, an affected device, and the faulty converter also exists. The affected device is another converter connected in parallel to the faulty converter. Therefore, when one of the power conversion systems in the power supply system is faulty, spreading of the short-circuit current may affect both the energy storage unit and the another converter connected in parallel to the faulty converter. If spreading of a short-circuit fault is not avoided in time, normal working of other converters in the power supply system is further interfered, and the another converter is even damaged.

In a power supply system provided in this application, the power supply system includes an energy storage unit, a plurality of converters, a controller, and a plurality of positive switch units and a plurality of negative switch units that one-to-one correspond to the plurality of converters. A positive direct current end of each converter is connected to a positive direct current busbar by using the corresponding positive switch unit. A negative direct current end of each converter is connected to a negative direct current busbar by using the corresponding negative switch unit. The positive direct current busbar and the negative direct current busbar are respectively connected to a positive electrode and a negative electrode of the energy storage unit. An alternating current end of each converter is connected to a power grid. Herein, the converter may be an independent power conversion apparatus or a power conversion unit in a power conversion apparatus. When the converter is an independent power conversion apparatus, the positive switch unit and the negative switch unit are connected, outside the converter, to the converter. When the converter is a power conversion unit, the positive switch unit and the negative switch unit are connected to, in the power conversion apparatus, a converter that serves as the power conversion unit. The controller may be a controller disposed in the plurality of converters, and the controller in each converter is configured to separately control the switch unit connected to the corresponding converter. Alternatively, the controller may be a controller disposed outside the converter, and is configured to control the switch unit connected to each converter. This may be specifically determined based on an actual application scenario, and is not limited herein. When a short-circuit fault occurs on one converter (which may be referred to as a first converter) of the plurality of converters, a short-circuit current occurs on the power supply system. The short-circuit current includes a first short-circuit current and a second short-circuit current. Specifically, the first short-circuit current includes a short-circuit current flowing from the positive electrode of the energy storage unit to a positive direct current end of the first converter and a short-circuit current flowing from a negative direct current end of the first converter to the negative electrode of the energy storage unit. The second short-circuit current includes a short-circuit current flowing, to the first converter, from another converter (which may be referred to as a second converter) connected in parallel to the first converter. The controller is configured to: when the first converter is short-circuited, control switch devices in a first positive switch unit and a first negative switch unit that are connected to the first converter to be turned off. For example, the controller controls the switch devices in the first positive switch unit and the first negative switch unit to be turned off, to cut off the first short-circuit current, or simultaneously cut off the first short-circuit current and the second short-circuit current. The controller is further configured to control a switch device in a second positive switch unit or a second negative switch unit that is connected to the second converter to be turned off, or control switch devices in a second positive switch unit and a second negative switch unit to be simultaneously turned off, to cut off the second short-circuit current. Herein, when any converter is short-circuited, each converter controls, by using each respective controller or by using one controller, switch devices in a positive switch unit and a negative switch unit that are connected to the converter to be turned off, to cut off a short-circuit current between the converter and a corresponding energy storage unit. In addition, the controller controls a switch device in at least one of a positive switch unit and a negative switch unit to be turned off, where the positive switch unit and the negative switch unit are connected to another converter connected in parallel to a faulty converter, to cut off a path of a short-circuit current flowing between a power grid, an affected device, and the faulty converter. This prevents the short-circuit current from interfering with normal working of another converter or even damaging the another converter, and improves working reliability of the power supply system.

In some feasible implementations, the controller is configured to: when a voltage between the positive direct current busbar and the negative direct current busbar that are connected to the first converter in the plurality of converters is lower than a specified voltage threshold, determine that the short-circuit fault occurs on the first converter. When the short-circuit fault occurs on the first converter, the first short-circuit current and the second short-circuit current occur on the power supply system. Then, the controller controls the switch devices in the first positive switch unit and the first negative switch unit that are connected to the first converter to be turned off. For example, the controller controls the switch devices in the first positive switch unit and the first negative switch unit to be turned off, to cut off the first short-circuit current, or simultaneously cut off the first short-circuit current and the second short-circuit current. The controller is further configured to obtain that a magnitude of the second short-circuit current output by the second converter is greater than a specified current threshold, for example, detect a common-mode current output by the second converter, to obtain the magnitude of the second short-circuit current between the first converter and the second converter connected in parallel to the first converter. When the magnitude of the second short-circuit current output by the second converter is greater than the specified current threshold, the controller controls the switch device in the second positive switch unit or the second negative switch unit that is connected to the second converter to be turned off, or controls the switch devices in the second positive switch unit and the second negative switch unit to be simultaneously turned off, to cut off the second short-circuit current. Herein, by using each respective controller or by using one controller, each converter obtains the voltage between the positive direct current busbar and the negative direct current busbar that are connected to each converter, to detect whether the short-circuit fault occurs on each converter, and when the voltage between the positive direct current busbar and the negative direct current busbar that are connected to any converter is excessively low, controls switch devices in the positive switch unit and the negative switch unit that are connected to the converter to be turned off, to cut off a short-circuit current between the faulty converter and a corresponding energy storage unit. In addition, when the second short-circuit current output by the converter is excessively high, the controller determines that the short-circuit fault spreads, and controls the switch device in at least one of the positive switch unit and the negative switch unit that are connected to the converter to be turned off, to cut off the path of the short-circuit current flowing between the power grid, the affected device, and the faulty converter. This prevents the short-circuit current from interfering with normal working of another converter or even damaging the another converter, and improves working reliability of the power supply system.

In some feasible implementations, the energy storage unit in the power supply system is a battery cluster. FIG. 3 is a diagram of a structure of the power supply system according to this application. The power supply system shown in FIG. 3 includes an energy storage unit and a plurality of converters. The energy storage unit is a battery cluster including a plurality of battery packs connected in series. The energy storage unit is connected to the plurality of converters. Two converters are used as an example, and FIG. 3 includes a converter A and a converter B. A positive direct current end and a negative direct current end of the converter A are respectively connected to a positive electrode and a negative electrode of the energy storage unit by using a positive direct current busbar and a negative direct current busbar. In addition, a positive switch unit K11 and a negative switch unit K12 are respectively connected in series to the positive direct current busbar and the negative direct current busbar that are connected to the converter A. Similarly, a positive direct current end and a negative direct current end of the converter B are respectively connected to the positive electrode and the negative electrode of the energy storage unit by using the positive direct current busbar and the negative direct current busbar. In addition, a positive switch unit K21 and a negative switch unit K22 are respectively connected in series to the positive direct current busbar and the negative direct current busbar that are connected to the converter B. In addition, alternating current ends of the converter A and the converter B are both connected to a power grid, and the alternating current ends of the converter A and the converter B may include three-phase outputs. In the power supply system shown in FIG. 3, a controller (not shown in FIG. 3) obtains a voltage between the positive direct current busbar and the negative direct current busbar that are connected to each converter, and when the voltage between the positive direct current busbar and the negative direct current busbar that are connected to any converter is lower than a specified voltage threshold, determines that a short-circuit fault occurs on the converter. For example, the controller obtains the voltage between the positive direct current busbar and the negative direct current busbar that are connected to the converter A, and the voltage is lower than the specified voltage threshold, and determines that the short-circuit fault occurs on the converter A. When the short-circuit fault occurs on the converter A, a first short-circuit current Ia occurs on the power supply system. The first short-circuit current Ia may include a short-circuit current flowing from the positive electrode of the energy storage unit to the positive direct current end of the first converter and a short-circuit current flowing from the negative direct current end of the first converter to the negative electrode of the energy storage unit. When the short-circuit fault occurs on the converter A, because the converter B is connected in parallel to the converter A, a second short-circuit current Ib1 and a second short-circuit current Ib2 also occur on the power supply system. The second short-circuit current Ib1 flows from the positive direct current end of the converter B to the positive direct current end of the converter A, and the second short-circuit current Ib2 flows from the negative direct current end of the converter B to the negative direct current end of the converter A. Then, the controller controls switch devices in the positive switch unit K11 and the negative switch unit K12 that are connected to the converter A to be turned off. For example, the controller controls the switch devices in the positive switch unit K11 and the negative switch unit K12 to be turned off, to cut off the first short-circuit current Ia, or simultaneously cut off the first short-circuit current Ia, the second short-circuit current Ib1, and the second short-circuit current Ib2. The controller is further configured to detect the second short-circuit current output by the converter B, and when a magnitude of the second short-circuit current output by the converter B is greater than a specified current threshold, determine that a second short-circuit current still exists between the converter A and the converter B connected in parallel to the converter A. The controller controls a switch device in the positive switch unit K21 or the negative switch unit K22 that is connected to the converter B to be turned off, or controls switch devices in the positive switch unit K21 and the negative switch unit K22 to be simultaneously turned off, to cut off the second short-circuit current Ib1 and the second short-circuit current Ib2. Herein, by using each respective controller or by using one controller, each converter obtains the voltage between the positive direct current busbar and the negative direct current busbar that are connected to each converter, to detect whether the short-circuit fault occurs on each converter, and when the voltage between the positive direct current busbar and the negative direct current busbar that are connected to any converter is excessively low, controls switch devices in the positive switch unit and the negative switch unit that are connected to the converter to be turned off, to cut off a short-circuit current between the faulty converter and a corresponding energy storage unit. In addition, the controller controls a switch device in at least one of a positive switch unit and a negative switch unit that are connected to a converter on which the short-circuit fault does not occur to be turned off, to cut off the path of the short-circuit current flowing between the power grid, the affected device, and the faulty converter. This prevents the short-circuit current from interfering with normal working of the converter or even damaging the converter, and improves working reliability of the power supply system.

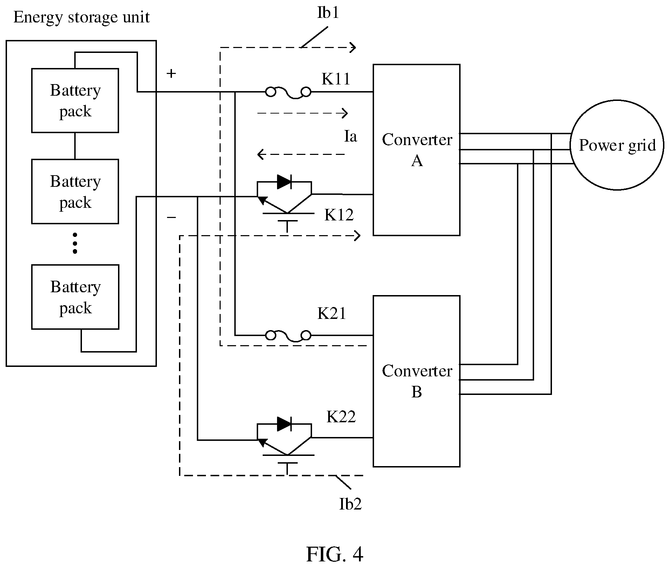

In some feasible implementations, the negative switch unit connected to the converter in the power supply system includes an anti-reverse device. In addition, the switch device in the positive switch unit is configured to: when the switch device in the positive switch unit is turned on or turned off, separately connect or disconnect the positive direct current busbar to or from the positive direct current end of the corresponding converter. The power supply system shown in FIG. 3 is used as an example. The negative switch unit K12 connected to the converter A and the negative switch unit K22 connected to the converter B include the anti-reverse device, and the switch devices in the positive switch unit K11 connected to the converter A and the positive switch unit K21 connected to the converter B are fast turn-off apparatuses. With reference to FIG. 4, FIG. 4 is a diagram of another structure of the power supply system according to this application. In the power supply system shown in FIG. 4, the switch devices in the positive switch unit K11 connected to the converter A and the positive switch unit K21 connected to the converter B are fast turn-off apparatuses. The fast turn-off apparatus may be a device having a fast turn-off function, such as a pyrofuse or an excitation fuse. The negative switch unit K12 connected to the converter A includes the switch device and the anti-reverse device. The switch device may be a semiconductor switch, and the anti-reverse device is a diode connected in parallel to the semiconductor switch. A positive electrode of the diode is connected to the negative electrode of the energy storage unit, and a negative electrode of the diode is connected to the negative direct current end of the converter A. Similarly, the negative switch unit K22 connected to the converter B includes a semiconductor switch and the anti-reverse device. The anti-reverse device is a diode connected in parallel to the semiconductor switch, and a positive electrode of the diode is connected to the negative electrode of the energy storage unit, and a negative electrode of the diode is connected to the negative direct current end of the converter B. The controller (not shown in FIG. 4) obtains the voltage between the positive direct current busbar and the negative direct current busbar that are connected to each converter, and when the voltage between the positive direct current busbar and the negative direct current busbar that are connected to any converter is lower than a specified voltage threshold, determines that a short-circuit fault occurs on the converter. For example, the controller obtains the voltage between the positive direct current busbar and the negative direct current busbar that are connected to the converter A, and the voltage is lower than the specified voltage threshold, and determines that the short-circuit fault occurs on the converter A. When the short-circuit fault occurs on the converter A, the first short-circuit current Ia occurs on the power supply system. The first short-circuit current Ia may include the short-circuit current flowing from the positive electrode of the energy storage unit to the positive direct current end of the first converter and the short-circuit current flowing from the negative direct current end of the first converter to the negative electrode of the energy storage unit. When the short-circuit fault occurs on the converter A, because the converter B is connected in parallel to the converter A, the second short-circuit current Ib1 and the second short-circuit current Ib2 also occur on the power supply system. The second short-circuit current Ib1 flows from the positive direct current end of the converter B to the positive direct current end of the converter A, and the second short-circuit current Ib2 flows from the negative direct current end of the converter B to the negative direct current end of the converter A. Then, the controller may control the fast turn-off apparatus connected to the positive direct current end of the converter A to be turned off and control the semiconductor switch in the negative switch unit K12 to be turned off. The fast turn-off apparatus is configured to: when the fast turn-off apparatus turned off, disconnect the positive direct current busbar from the positive direct current end of the converter A, so that the short-circuit current, in the first short-circuit current Ia, flowing from the positive electrode of the energy storage unit to the positive direct current end of the converter A is cut off, and the diode in the switch unit K12 cuts off the short-circuit current flowing from the negative direct current end of the first converter to the negative electrode of the energy storage unit. A current path of the second short-circuit current Ib1 includes the fast turn-off apparatus connected to the positive direct current end of the converter A. After the fast turn-off apparatus is turned off, the second short-circuit current Ib1 is also cut off. After the semiconductor switch in the negative switch unit K12 is turned off, the second short-circuit current Ib2 flows from the positive electrode of the diode in the negative switch unit K12 to the negative electrode of the diode. That is, a direction of the second short-circuit current Ib2 is consistent with a conduction direction of the diode in the negative switch unit K12, and the second short-circuit current Ib2 cannot be cut off. When the magnitude of the second short-circuit current output by the converter B is greater than the specified current threshold, the controller determines that the second short-circuit current still exists between the converter A and the converter B connected in parallel to the converter A. The controller controls the semiconductor switch in the negative switch unit K22 to be turned off, and the second short-circuit current Ib2 flows from the negative electrode of the diode in the negative switch unit K22 to the positive electrode of the diode. That is, the diode in the negative switch unit K22 may reversely cut off the second short-circuit current Ib2. Herein, when the short-circuit fault occurs on a converter, the controller controls switch devices in a positive switch unit and a negative switch unit that are connected to the converter to be turned off, to cut off the short-circuit current between the faulty converter and the corresponding energy storage unit. When the short-circuit fault spreads, the controller further controls a switch device in at least one of a positive switch unit and a negative switch unit that are connected to another converter to be turned off, to cut off the path of the short-circuit current path flowing between the power grid, the affected device, and the faulty converter, and prevent the short-circuit current from interfering with normal working of the another converter or even damaging the another converter. In addition, the switch device in each negative switch unit in FIG. 4 is a semiconductor switch, and the semiconductor switch may be turned off at a microsecond level. That is, a speed of cutting off the short-circuit current can be ensured, to prevent the faulty converter from being damaged due to overcurrent. The switch device in each positive switch unit in FIG. 4 is a fast turn-off apparatus. When each converter works normally, the fast turn-off apparatus can reduce a loss of a normal power current, and ensure power supply efficiency of the power supply system.

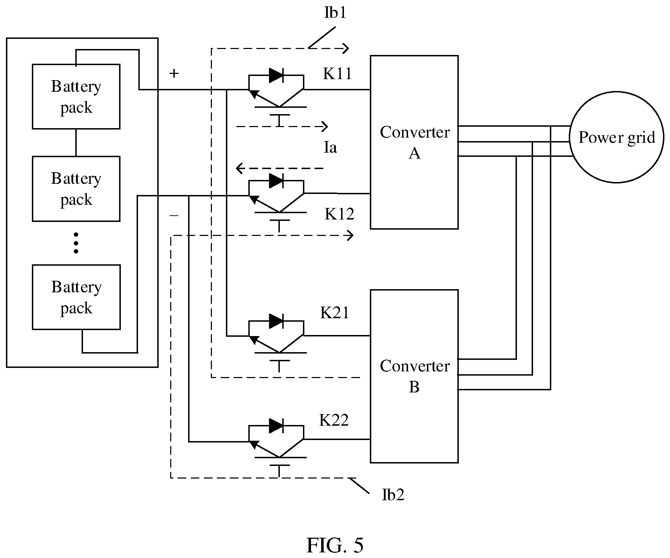

In some feasible implementations, the positive switch unit and the negative switch unit that are connected to each converter in the power supply system each include the anti-reverse device. With reference to FIG. 5, FIG. 5 is a diagram of another structure of the power supply system according to this application. In the power supply system shown in FIG. 5, the positive switch unit K11 and the negative switch unit K12 that are connected to the converter A include the switch device and the anti-reverse device. The switch device may be a semiconductor switch, and the anti-reverse device is a diode connected in parallel to the semiconductor switch. The positive electrodes of the diodes in the positive switch unit K11 and the negative switch unit K12 are respectively connected to the positive electrode and the negative electrode of the energy storage unit, and the negative electrodes of the diodes are respectively connected to the positive direct current end and the negative direct current end of the converter A. The positive switch unit K21 connected to the converter B and the negative switch unit K22 connected to the converter B include the switch device and the anti-reverse device. The switch device may be a semiconductor switch, and the anti-reverse device is a diode connected in parallel to the semiconductor switch. The positive electrodes of the diodes in the positive switch unit K21 and the negative switch unit K22 are respectively connected to the positive electrode and the negative electrode of the energy storage unit, and the negative electrodes of the diodes are respectively connected to the positive direct current end and the negative direct current end of the converter B. The controller (not shown in FIG. 5) obtains the voltage between the positive direct current busbar and the negative direct current busbar that are connected to each converter, and when the voltage between the positive direct current busbar and the negative direct current busbar that are connected to any converter is lower than a specified voltage threshold, determines that a short-circuit fault occurs on the converter. For example, the controller obtains the voltage between the positive direct current busbar and the negative direct current busbar that are connected to the converter A, and the voltage is lower than the specified voltage threshold, and determines that the short-circuit fault occurs on the converter A. When the short-circuit fault occurs on the converter A, the first short-circuit current Ia, the second short-circuit current Ib1, and the second short-circuit current Ib2 occur on the power supply system. Paths of the short-circuit currents are similar to those in FIG. 4, and details are not described herein again. Then, the controller may control the semiconductor switch in the positive switch unit K11 to be turned off and control the semiconductor switch in the negative switch unit K12 to be turned off, and the diode in the switch unit K12 cuts off the short-circuit current flowing from the negative direct current end of the converter A to the negative electrode of the energy storage unit, to cut off the first short-circuit current Ia. After the semiconductor switch in the positive switch unit K11 is turned off, the second short-circuit current Ib1 flows from the positive electrode of the diode in the positive switch unit K11 to the negative electrode of the diode. That is, a direction of the second short-circuit current Ib1 is consistent with a conduction direction of the diode in the positive switch unit K11, and the second short-circuit current Ib1 cannot be cut off. Similarly, after the semiconductor switch in the negative switch unit K12 is turned off, the second short-circuit current Ib2 flows from the positive electrode of the diode in the negative switch unit K12 to the negative electrode of the diode. That is, a direction of the second short-circuit current Ib2 is consistent with a conduction direction of the diode in the negative switch unit K12, and the second short-circuit current Ib2 cannot be cut off. When the magnitude of the second short-circuit current output by the converter B is greater than the specified current threshold, the controller determines that the second short-circuit current still exists between the converter A and the converter B connected in parallel to the converter A. The controller controls the semiconductor switch in the negative switch unit K21 to be turned off, and the second short-circuit current Ib1 flows from the negative electrode of the diode in the positive switch unit K21 to the positive electrode of the diode. That is, the diode in the positive switch unit K21 may reversely cut off the second short-circuit current Ib1. The controller controls the semiconductor switch in the negative switch unit K22 to be turned off, and the second short-circuit current Ib2 flows from the negative electrode of the diode in the negative switch unit K22 to the positive electrode of the diode. That is, the diode in the negative switch unit K22 may reversely cut off the second short-circuit current Ib2. Herein, when the short-circuit fault occurs on a converter, the controller controls switch devices in a positive switch unit and a negative switch unit that are connected to the converter to be turned off, to cut off the short-circuit current between the faulty converter and the corresponding energy storage unit. When the short-circuit fault spreads, the controller further controls a switch device in at least one of a positive switch unit and a negative switch unit that are connected to another converter to be turned off, to cut off the path of the short-circuit current path flowing between the power grid, the affected device, and the faulty converter, and prevent the short-circuit current from interfering with normal working of the another converter or even damaging the another converter. In addition, the switch device in each switch unit in FIG. 5 is a semiconductor switch, and the semiconductor switch may be turned off at a microsecond level. That is, a speed of cutting off the short-circuit current can be ensured, to prevent the faulty converter from being damaged due to overcurrent.

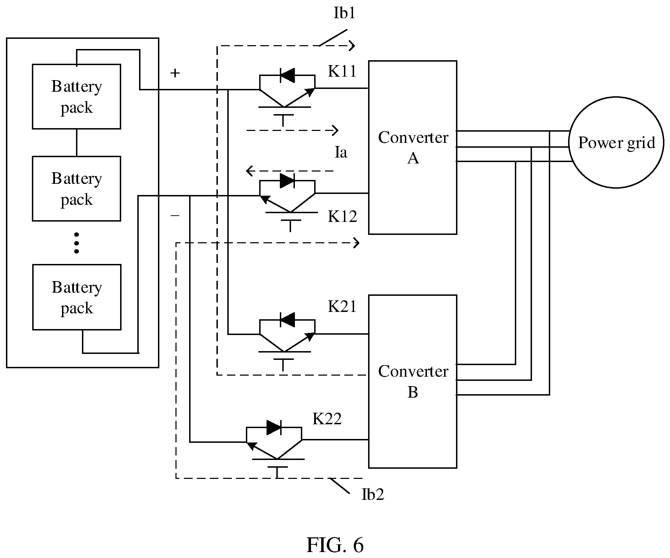

In some feasible implementations, the positive switch unit and the negative switch unit that are connected to each converter in the power supply system each include the anti-reverse device. With reference to FIG. 6, FIG. 6 is a diagram of another structure of the power supply system according to this application. In the power supply system shown in FIG. 6, the positive switch unit K11 connected to the converter A and the positive switch unit K21 connected to the converter B include the switch device and the anti-reverse device. The switch device may be a semiconductor switch, and the anti-reverse device is a diode connected in parallel to the semiconductor switch. The positive electrodes of the diodes in the positive switch unit K11 and the positive switch unit K21 are respectively connected to the positive direct current end of the converter A and the positive direct current end of the converter B, and the negative electrodes of the diodes are connected to the positive electrode of the energy storage unit. The negative switch unit K12 connected to the converter A and the negative switch unit K22 connected to the converter B include the switch device and the anti-reverse device. The switch device may be a semiconductor switch, and the anti-reverse device is a diode connected in parallel to the semiconductor switch. The positive electrodes of the diodes in the negative switch unit K12 and the negative switch unit K22 are connected to the negative electrode of the energy storage unit, and the negative electrodes of the diodes are respectively connected to the negative direct current end of the converter A and the negative direct current end of the converter B. The controller (not shown in FIG. 6) obtains the voltage between the positive direct current busbar and the negative direct current busbar that are connected to each converter, and when the voltage between the positive direct current busbar and the negative direct current busbar that are connected to any converter is lower than a specified voltage threshold, determines that a short-circuit fault occurs on the converter. For example, the controller obtains the voltage between the positive direct current busbar and the negative direct current busbar that are connected to the converter A, and the voltage is lower than the specified voltage threshold, and determines that the short-circuit fault occurs on the converter A. When the short-circuit fault occurs on the converter A, the first short-circuit current Ia, the second short-circuit current Ib1, and the second short-circuit current Ib2 occur on the power supply system. Paths of the short-circuit currents are similar to those in FIG. 4, and details are not described herein again. Then, the controller may control the semiconductor switch in the positive switch unit K11 to be turned off and control the semiconductor switch in the negative switch unit K12 to be turned off, the diode in the switch unit K11 cuts off the short-circuit current flowing from the positive electrode of the energy storage unit to the positive direct current end of the converter A, and the diode in the switch unit K12 cuts off the short-circuit current flowing from the negative direct current end of the converter A to the negative electrode of the energy storage unit, to cut off the first short-circuit current Ia. After the semiconductor switch in the positive switch unit K11 is turned off, the second short-circuit current Ib1 flows from the negative electrode of the diode in the positive switch unit K11 to the positive electrode of the diode. That is, the diode in the positive switch unit K11 may reversely cut off the second short-circuit current Ib1. After the semiconductor switch in the negative switch unit K12 is turned off, the second short-circuit current Ib2 flows from the positive electrode of the diode in the negative switch unit K12 to the negative electrode of the diode. That is, a direction of the second short-circuit current Ib2 is consistent with a conduction direction of the diode in the negative switch unit K12, and the second short-circuit current Ib2 cannot be cut off. When the magnitude of the second short-circuit current output by the converter B is greater than the specified current threshold, the controller determines that the second short-circuit current still exists between the converter A and the converter B connected in parallel to the converter A. The controller controls the semiconductor switch in the negative switch unit K22 to be turned off, and the second short-circuit current Ib2 flows from the negative electrode of the diode in the negative switch unit K22 to the positive electrode of the diode. That is, the diode in the negative switch unit K22 may reversely cut off the second short-circuit current Ib2. Herein, when the short-circuit fault occurs on a converter, the controller controls switch devices in a positive switch unit and a negative switch unit that are connected to the converter to be turned off, to cut off the short-circuit current between the faulty converter and the corresponding energy storage unit. When the short-circuit fault spreads, the controller further controls a switch device in at least one of a positive switch unit and a negative switch unit that are connected to another converter to be turned off, to cut off the path of the short-circuit current path flowing between the power grid, the affected device, and the faulty converter, and prevent the short-circuit current from interfering with normal working of the another converter or even damaging the another converter. In addition, the switch device in each switch unit in FIG. 6 is a semiconductor switch, and the semiconductor switch may be turned off at a microsecond level. That is, a speed of cutting off the short-circuit current can be ensured, to prevent the faulty converter from being damaged due to overcurrent.

In some feasible implementations, a switch device in the first positive switch unit is configured to: when the switch device in the first positive switch unit is turned off, cut off a current flowing into the positive direct current end of the first converter. A switch device in the first negative switch unit is configured to: when the switch device in the first negative switch unit is turned off, cut off a current flowing into the negative direct current end of the first converter or cut off a current flowing out from the negative direct current end of the first converter. The controller is configured to: when the first converter is short-circuited, control the switch devices in the first positive switch unit and the first negative switch unit that are connected to the first converter to be turned off. When any converter is short-circuited, each converter controls, by using each respective controller or by using one controller, switch devices in a positive switch unit and a negative switch unit that are connected to the converter to be turned off, to cut off a short-circuit current between the converter and a corresponding energy storage unit. In addition, when the switch device in the first positive switch unit is turned off, the switch device in the first positive switch unit cuts off the current flowing into the positive direct current end of the first converter. In addition, when the switch device in the first negative switch unit is turned off, the switch device in the first negative switch unit cuts off the current flowing into the negative direct current end of the first converter or cuts off the current flowing out from the negative direct current end of the first converter. Therefore, when the switch devices in the first positive switch unit and the first negative switch unit are turned off, a short-circuit current between the faulty converter and a corresponding energy storage unit and a short-circuit current flowing between a power grid, an affected device, and the faulty converter may be simultaneously cut off. This prevents the short-circuit current from interfering with normal working of another converter or even damaging the another converter, and improves working reliability of the power supply system.

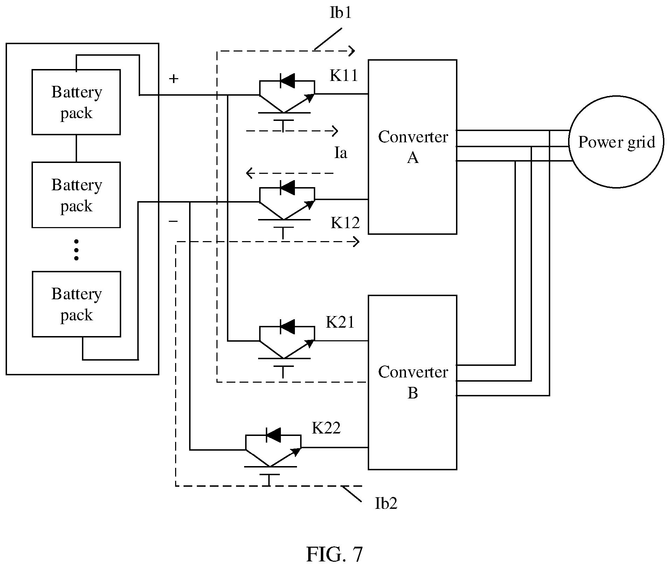

In some feasible implementations, the positive switch unit and the negative switch unit that are connected to each converter in the power supply system each include the anti-reverse device. With reference to FIG. 7, FIG. 7 is a diagram of another structure of the power supply system according to this application. In the power supply system shown in FIG. 7, the positive switch unit K11 and the negative switch unit K12 that are connected to the converter A include the switch device and the anti-reverse device. The switch device may be a semiconductor switch, and the anti-reverse device is a diode connected in parallel to the semiconductor switch. The positive electrodes of the diodes in the positive switch unit K11 and the negative switch unit K12 are respectively connected to the positive direct current end and the negative direct current end of the converter A, and the negative electrodes of the diodes are respectively connected to the positive electrode and the negative electrode of the energy storage unit. The positive switch unit K21 connected to the converter B and the negative switch unit K22 connected to the converter B include the switch device and the anti-reverse device. The switch device may be a semiconductor switch, and the anti-reverse device is a diode connected in parallel to the semiconductor switch. The positive electrodes of the diodes in the positive switch unit K21 and the negative switch unit K22 are respectively connected to the positive direct current end and the negative direct current end of the converter B, and the negative electrodes of the diodes are respectively connected to the positive electrode and the negative electrode of the energy storage unit. The controller (not shown in FIG. 7) obtains the voltage between the positive direct current busbar and the negative direct current busbar that are connected to each converter, and when the voltage between the positive direct current busbar and the negative direct current busbar that are connected to any converter is lower than a specified voltage threshold, determines that a short-circuit fault occurs on the converter. For example, the controller obtains the voltage between the positive direct current busbar and the negative direct current busbar that are connected to the converter A, and the voltage is lower than the specified voltage threshold, and determines that the short-circuit fault occurs on the converter A. When the short-circuit fault occurs on the converter A, the first short-circuit current Ia, the second short-circuit current Ib1, and the second short-circuit current Ib2 occur on the power supply system. Paths of the short-circuit currents are similar to those in FIG. 4, and details are not described herein again. Then, the controller may control the semiconductor switch in the positive switch unit K11 to be turned off and control the semiconductor switch in the negative switch unit K12 to be turned off, and the diode in the switch unit K11 cuts off the short-circuit current flowing from the positive electrode of the energy storage unit to the positive direct current end of the converter A, to cut off the first short-circuit current Ia. After the semiconductor switch in the positive switch unit K11 is turned off, the second short-circuit current Ib1 flows from the negative electrode of the diode in the positive switch unit K11 to the positive electrode of the diode. That is, the diode in the positive switch unit K11 may reversely cut off the second short-circuit current Ib1. After the semiconductor switch in the negative switch unit K12 is turned off, the second short-circuit current Ib2 flows from the negative electrode of the diode in the negative switch unit K12 to the positive electrode of the diode. That is, the diode in the negative switch unit K12 may reversely cut off the second short-circuit current Ib2. Herein, when the short-circuit fault occurs on a converter, the controller controls switch devices in a positive switch unit and a negative switch unit that are connected to the converter to be turned off, to cut off a short-circuit current between the faulty converter and the corresponding energy storage unit, and also cut off the path of the short-circuit current flowing between the power grid, the affected device, and the faulty converter. The operation is simple, and prevents the short-circuit current from interfering with normal working of another converter or even damaging the another converter.

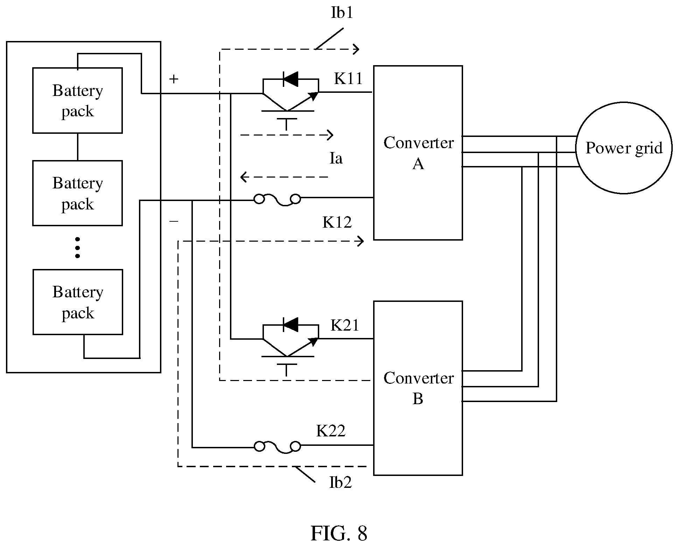

In some feasible implementations, the switch device in the negative switch unit connected to each converter in the power supply system is configured to: when the switch device in the negative switch unit is turned on or turned off, separately connect or disconnect the negative direct current busbar to or from the negative direct current end of the corresponding converter. In addition, the positive switch unit includes the anti-reverse device. With reference to FIG. 8, FIG. 8 is a diagram of another structure of the power supply system according to this application. In the power supply system shown in FIG. 8, the switch devices in the negative switch unit K12 connected to the converter A and the negative switch unit K22 connected to the converter B are fast turn-off apparatuses. The fast turn-off apparatus may be a device having a fast turn-off function, such as a pyrofuse or an excitation fuse. The positive switch unit K11 connected to the converter A and the positive switch unit K21 connected to the converter B include the switch device and the anti-reverse device. The switch device may be a semiconductor switch, and the anti-reverse device is a diode connected in parallel to the semiconductor switch. In addition, the negative electrodes of the diodes in the positive switch unit K11 and the positive switch unit K21 are connected to the negative electrode of the energy storage unit, and the positive electrodes of the diodes are respectively connected to the positive direct current end of the converter A and the positive direct current end of the converter B. The controller (not shown in FIG. 8) obtains the voltage between the positive direct current busbar and the negative direct current busbar that are connected to each converter, and when the voltage between the positive direct current busbar and the negative direct current busbar that are connected to any converter is lower than a specified voltage threshold, determines that a short-circuit fault occurs on the converter. For example, the controller obtains the voltage between the positive direct current busbar and the negative direct current busbar that are connected to the converter A, and the voltage is lower than the specified voltage threshold, and determines that the short-circuit fault occurs on the converter A. When the short-circuit fault occurs on the converter A, the first short-circuit current Ia, the second short-circuit current Ib1, and the second short-circuit current Ib2 occur on the power supply system. Paths of the short-circuit currents are similar to those in FIG. 4, and details are not described herein again. Then, the controller may control the fast turn-off apparatus connected to the negative direct current end of the converter A to be turned off and control the semiconductor switch in the positive switch unit K11 to be turned off, and the diode in the switch unit K11 cuts off the short-circuit current flowing from the positive electrode of the energy storage unit to the positive direct current end of the converter A, to cut off the first short-circuit current Ia. A current path of the second short-circuit current Ib2 includes the fast turn-off apparatus connected to the negative direct current end of the converter A. After the fast turn-off apparatus is turned off, the second short-circuit current Ib2 is also cut off. After the semiconductor switch in the positive switch unit K11 is turned off, the second short-circuit current Ib1 flows from the negative electrode of the diode in the positive switch unit K11 to the positive electrode of the diode. That is, the diode in the positive switch unit K11 may reversely cut off the second short-circuit current Ib1. Herein, when the short-circuit fault occurs on a converter, the controller controls switch devices in a positive switch unit and a negative switch unit that are connected to the converter to be turned off, to cut off a short-circuit current between the faulty converter and the corresponding energy storage unit, and also cut off the path of the short-circuit current flowing between the power grid, the affected device, and the faulty converter. The operation is simple, and prevents the short-circuit current from interfering with normal working of another converter or even damaging the another converter.

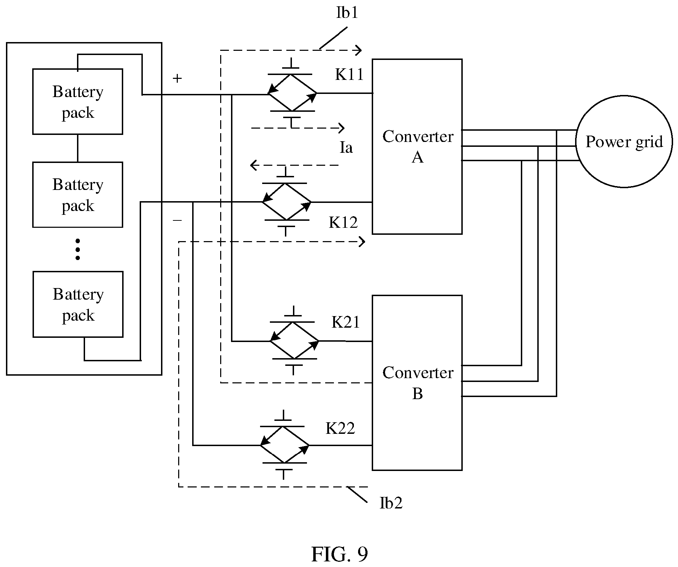

In some feasible implementations, the switch devices in the positive switch unit and the negative switch unit that are connected to the converters in the power supply system are reverse blocking switch transistors. Specifically, the switch devices in the positive switch unit and the negative switch unit may be reverse blocking insulated gate bipolar transistors (insulated gate bipolar transistors, IGBTs) having a bidirectional symmetric blocking capability. With reference to FIG. 9, FIG. 9 is a diagram of another structure of the power supply system according to this application. In the power supply system shown in FIG. 9, the switch devices in the positive switch unit K11 and the negative switch unit K12 that are connected to the converter A are the reverse blocking IGBTs, and the switch devices in the positive switch unit K21 and the negative switch unit K22 that are connected to the converter B are also the reverse blocking IGBTs. The controller (not shown in FIG. 9) obtains the voltage between the positive direct current busbar and the negative direct current busbar that are connected to each converter, and when the voltage between the positive direct current busbar and the negative direct current busbar that are connected to any converter is lower than a specified voltage threshold, determines that a short-circuit fault occurs on the converter. For example, the controller obtains the voltage between the positive direct current busbar and the negative direct current busbar that are connected to the converter A, and the voltage is lower than the specified voltage threshold, and determines that the short-circuit fault occurs on the converter A. When the short-circuit fault occurs on the converter A, the first short-circuit current Ia, the second short-circuit current Ib1, and the second short-circuit current Ib2 occur on the power supply system. Paths of the short-circuit currents are similar to those in FIG. 4, and details are not described herein again. Then, the controller may control the reverse blocking IGBTs in the positive switch unit K11 and the negative switch unit K12 to be turned off, to cut off the first short-circuit current Ia. Because the reverse blocking IGBT has the bidirectional symmetric blocking capability, the reverse blocking IGBT in the positive switch unit K11 may further reversely cut off the second short-circuit current Ib1, and the reverse blocking IGBT in the negative switch unit K12 may further reversely cut off the second short-circuit current Ib2. Herein, when the short-circuit fault occurs on a converter, the controller controls switch devices in a positive switch unit and a negative switch unit that are connected to the converter to be turned off, to cut off a short-circuit current between the faulty converter and the corresponding energy storage unit, and also cut off the path of the short-circuit current flowing between the power grid, the affected device, and the faulty converter. The operation is simple, and prevents the short-circuit current from interfering with normal working of another converter or even damaging the another converter.

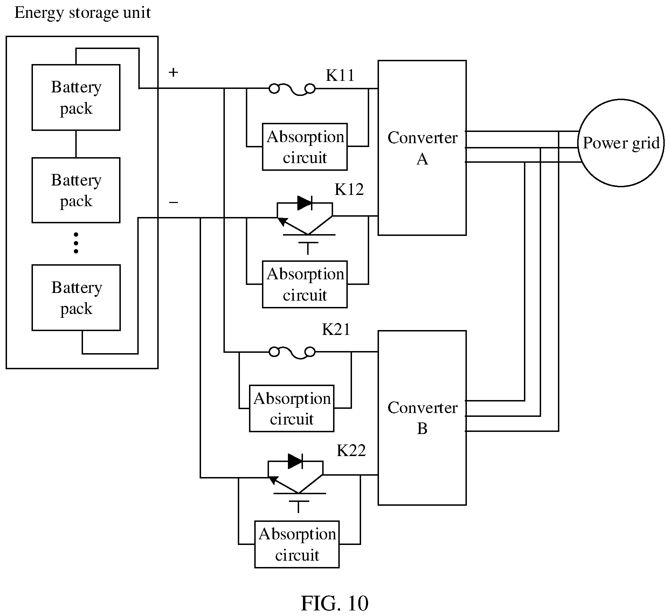

In some feasible implementations, one absorption circuit is separately connected to two ends of the switch devices in the positive switch unit and the negative switch unit that are connected to each converter in the above power supply system. The absorption circuit is used to absorb a peak voltage when the corresponding switch device works. The power supply system shown in FIG. 4 is used as an example. The negative switch unit K12 connected to the converter A and the negative switch unit K22 connected to the converter B each include the semiconductor switch. The semiconductor switch has a fast working speed. In addition, because there is an inductor and a capacitor in a loop in which the semiconductor switch is located, overvoltage occurs in a working process of the semiconductor switch, for example, turn-off overvoltage during turn-off and resonant overvoltage after turn-off. To cope with an overvoltage scenario, a corresponding stress absorption circuit is connected to two ends of the semiconductor switch. Similarly, the switch devices in the positive switch unit K11 connected to the converter A and the positive switch unit K21 connected to the converter B are fast turn-off apparatuses, and a corresponding stress absorption circuit may also be connected to two ends of the fast turn-off apparatus. With reference to FIG. 10, FIG. 10 is a diagram of another structure of the power supply system according to this application. In the power supply system shown in FIG. 10, one absorption circuit is connected in parallel to two ends of the semiconductor switch in the negative switch unit K12 connected to the converter A and two ends of the semiconductor switch in the negative switch unit K22 connected to the converter B. In addition, one absorption circuit is connected in parallel to the fast turn-off apparatuses in both the positive switch unit K11 connected to the converter A and the positive switch unit K21 connected to the converter B. The absorption circuit is configured to absorb the peak voltage when the corresponding semiconductor switch or the fast turn-off apparatus works, to prevent the semiconductor switch or the fast turn-off apparatus from the overvoltage. Specifically, the absorption circuit may be an absorption circuit including devices like a varistor, a voltage stabilizing transistor, a TVS transistor, an RCD circuit, a gas discharge transistor, and the like, or an absorption circuit including the devices that are connected in a combination of a series connection and a parallel connection. This may be specifically determined based on an actual application scenario, and is not limited herein.

## Claims

1. A power supply system, wherein the power supply system comprises an energy storage unit, a plurality of converters, a controller, a plurality of positive switch units and a plurality of negative switch units that one-to-one correspond to the plurality of converters, a positive direct current end of each converter is connected to a positive direct current busbar by using the corresponding positive switch unit, a negative direct current end of each converter is connected to a negative direct current busbar by using the corresponding negative switch unit, and the positive direct current busbar and the negative direct current busbar are respectively connected to a positive electrode and a negative electrode of the energy storage unit;
a positive direct current end of a first converter in the plurality of converters is connected to the positive direct current busbar by using a first positive switch unit in the plurality of positive switch units, a negative direct current end of the first converter is connected to the negative direct current busbar by using a first negative switch unit in the plurality of negative switch units, a positive direct current end of a second converter in the plurality of converters is connected to the positive direct current busbar by using a second positive switch unit in the plurality of positive switch units, and a negative direct current end of the second converter is connected to the negative direct current busbar by using a second negative switch unit in the plurality of negative switch units; and
the controller is configured to: when the first converter is short-circuited, control switch devices in the first positive switch unit and the first negative switch unit that are connected to the first converter to be turned off, and control a switch device in the second positive switch unit connected to the second converter and/or a switch device in the second negative switch unit connected to the second converter to be turned off.

2. The power supply system according to claim 1, wherein that the controller is specifically configured to: when the first converter is short-circuited, controlling the switch devices in the first positive switch unit and the first negative switch unit that are connected to the first converter to be turned off, and controlling the switch device in the second positive switch unit connected to the second converter and/or the switch device in the second negative switch unit connected to the second converter to be turned off comprises:
when a voltage between the positive direct current busbar and the negative direct current busbar that are connected to the first converter is lower than a specified voltage threshold, controlling the switch devices in the first positive switch unit and the first negative switch unit that are connected to the first converter to be turned off, and controlling the switch device in the second positive switch unit connected to the second converter and/or the switch device in the second negative switch unit connected to the second converter to be turned off.

3. The power supply system according to claim 1 or 2, wherein the positive switch unit comprises an anti-reverse device and/or the negative switch unit comprises an anti-reverse device, and the anti-reverse device is configured to: when a switch device in the positive switch unit or the negative switch unit that corresponds to the anti-reverse device is turned off, cut off a short-circuit current.

4. The power supply system according to claim 3, wherein the negative switch unit comprises the anti-reverse device, and the switch device in the positive switch unit is configured to: when the switch device in the positive switch unit is turned on or turned off, separately connect or disconnect the positive direct current busbar to or from the positive direct current end of the first converter;
the anti-reverse device in the first negative switch unit is configured to: when the switch device in the first negative switch unit is turned off, cut off a short-circuit current flowing from the negative direct current end of the first converter to the negative electrode of the energy storage unit; and
the anti-reverse device in the second negative switch unit is configured to: when the switch device in the second negative switch unit is turned off, cut off a short-circuit current flowing from the negative direct current end of the second converter to the negative direct current end of the first converter.

5. The power supply system according to claim 3, wherein the positive switch unit and the negative switch unit comprise the anti-reverse device;
the anti-reverse device in the first negative switch unit is configured to: when the switch device in the first negative switch unit is turned off, cut off a short-circuit current flowing from the negative direct current end of the first converter to the negative electrode of the energy storage unit;
the anti-reverse device in the second positive switch unit is configured to: when the switch device in the second positive switch unit is turned off, cut off a short-circuit current flowing from the positive direct current end of the second converter to the positive direct current end of the first converter; and
the anti-reverse device in the second negative switch unit is configured to: when the switch device in the corresponding negative switch unit is turned off, cut off a short-circuit current flowing from the negative direct current end of the second converter to the negative direct current end of the first converter.

6. The power supply system according to claim 3, wherein the positive switch unit and the negative switch unit comprise the anti-reverse device;
the anti-reverse device in the first positive switch unit is configured to: when the switch device in the first positive switch unit is turned off, cut off a short-circuit current flowing from the positive electrode of the energy storage unit to the positive direct current end of the first converter, and cut off a short-circuit current flowing from the positive direct current end of the second converter to the positive direct current end of the first converter;
the anti-reverse device in the first negative switch unit is configured to: when the switch device in the first negative switch unit is turned off, cut off a short-circuit current flowing from the negative direct current end of the first converter to the negative electrode of the energy storage unit; and
the anti-reverse device in the second negative switch unit is configured to: when the switch device in the second negative switch unit is turned off, cut off a short-circuit current flowing from the negative direct current end of the second converter to the negative direct current end of the first converter.

7. The power supply system according to any one of claims 1 to 6, wherein the energy storage unit and the plurality of converters are installed inside a container, and alternating current ends of the plurality of converters are connected to a power grid through an interface on the container.

8. A power supply system, wherein the power supply system comprises an energy storage unit, a plurality of converters, a controller, a plurality of positive switch units and a plurality of negative switch units that one-to-one correspond to the plurality of converters, a positive direct current end of each converter is connected to a positive direct current busbar by using the corresponding positive switch unit, a negative direct current end of each converter is connected to a negative direct current busbar by using the corresponding negative switch unit, and the positive direct current busbar and the negative direct current busbar are respectively connected to a positive electrode and a negative electrode of the energy storage unit;
a positive direct current end of a first converter in the plurality of converters is connected to the positive direct current busbar by using a first positive switch unit in the plurality of positive switch units, a negative direct current end of the first converter is connected to the negative direct current busbar by using a first negative switch unit in the plurality of negative switch units, a positive direct current end of a second converter in the plurality of converters is connected to the positive direct current busbar by using a second positive switch unit in the plurality of positive switch units, and a negative direct current end of the second converter is connected to the negative direct current busbar by using a second negative switch unit in the plurality of negative switch units;
a switch device in the first positive switch unit is configured to: when the switch device in the first positive switch unit is turned off, cut off a current flowing into the positive direct current end of the first converter, and a switch device in the first negative switch unit is configured to: when the switch device in the first negative switch unit is turned off, cut off a current flowing into the negative direct current end of the first converter or cut off a current flowing out from the negative direct current end of the first converter; and
the controller is configured to: when the first converter is short-circuited, control the switch devices in the first positive switch unit and the first negative switch unit that are connected to the first converter to be turned off.

9. The power supply system according to claim 8, wherein the positive switch unit and the negative switch unit comprise anti-reverse device;
the anti-reverse device in the first positive switch unit is configured to: when the switch device in the first positive switch unit is turned off, cut off a short-circuit current flowing from the positive electrode of the energy storage unit to the positive direct current end of the first converter, and cut off a short-circuit current flowing from the positive direct current end of the second converter to the positive direct current end of the first converter; and
the anti-reverse device in the first negative switch unit is configured to: when the switch device in the first negative switch unit is turned off, cut off a short-circuit current flowing from the negative electrode of the energy storage unit to the negative direct current end of the first converter, and cut off a short-circuit current flowing from the negative direct current end of the second converter to the negative direct current end of the first converter.

10. The power supply system according to claim 8, wherein the positive switch unit comprises the anti-reverse device, and a switch device in the negative switch unit is configured to: when the switch device in the negative switch unit is turned on or turned off, separately connect or disconnect the negative direct current busbar to or from the negative direct current end of the first converter; and
the anti-reverse device in the first positive switch unit is configured to: when the switch device in the first positive switch unit is turned off, cut off a short-circuit current flowing from the positive electrode of the energy storage unit to the positive direct current end of the first converter, and cut off a short-circuit current flowing from the positive direct current end of the second converter to the positive direct current end of the first converter.

11. The power supply system according to anyone of claims 8-10, wherein the energy storage unit and the plurality of converters are installed inside a container, and alternating current ends of the plurality of converters are connected to a power grid through an interface on the container.
